# EUROPÄISCHE PATENTANMELDUNG

(11) **EP 3 388 319 A1**
(43) Veröffentlichungstag der Anmeldung: **17.10.2018**
(21) Anmeldenummer: 18164837.9
(22) Anmeldetag: 29.03.2018
(51) Int. Cl.: B62K 3/00, B62M 6/45

(54) **VERFAHREN UND STEUERGERÄT ZUR STEUERUNG EINES MOTORANTRIEBS**

(30) Priorität: 30.03.2017 DE 102017205441
(71) Anmelder: Brake Force One GmbH, 72074 Tübingen (DE)
(72) Erfinder: Dittmer, Bernd, 71640 Ludwigsburg (DE); Haag, Hans-Christian, 70563 Stuttgart (DE); Kaefer, Sebastian, 70197 Stuttgart (DE); Gering, Stefan, 71287 Weissach (DE)
(74) Vertreter: Kohler Schmid Möbus Patentanwälte

(57) **Zusammenfassung**

Verfahren (100) zur Erkennung eines Störzustandes mit einem veränderten Fahrwiderstand eines mittels einer manuellen Abstoßbewegung antreibbaren Fahrzeugs zur Fortbewegung mindestens einer Person, um einen Motorantrieb des Fahrzeugs derart anzusteuern, dass eine von dem Motorantrieb auf das Fahrzeug aufgebrachte Motorkraft an den Störzustand mit dem veränderten Fahrwiderstand angepasst wird, mit folgenden Schritten:
- Empfangen (120; 130) mindestens eines ersten Sensorsignals und mindestens eines zweiten Sensorsignals, wobei das erste Sensorsignal einen Wert einer ersten Kenngröße und das zweite Sensorsignal einen Wert einer zweiten Kenngröße repräsentieren; und
- Vergleichen (140) der Werte der beiden Kenngrößen mit vorgebbaren Werten, um den Störzustand zu erkennen.

## Beschreibung

### Stand der Technik

Die Erfindung betrifft ein Verfahren zur Steuerung eines Motorantriebs, ein Steuergerät zur Ausführung des Verfahrens und ein Fahrzeug mit dem Steuergerät. Gegenstand der vorliegenden Erfindung ist auch ein Computerprogramm.

Bekannt sind Steuervorrichtungen beispielsweise für elektrisch unterstützte Tretroller. Hierbei wird der Tretroller durch eine mittels eines Fußes des Fahrers ausgeführte Abstoßbewegung angetrieben. Anschließend wird ein am Tretroller angeordneter Motorantrieb mittels der Steuervorrichtung automatisiert derart angesteuert, dass der Tretroller die Geschwindigkeit nach der Abstoßbewegung für eine gewisse Zeitdauer konstant hält beziehungsweise eine Abnahme der Geschwindigkeit beim Ausrollen des Tretrollers verlangsamt.

Aus der US 2014 0196968 A1 ist ein Tretroller mit einem Elektromotor bekannt, wobei der Tretroller ein Bremskontrollmodul aufweist, mittels dessen der Elektromotor elektromagnetisch bremsbar ist, wenn ein elektromagnetischer Bremsvorgang wünschenswert ist.

### Offenbarung der Erfindung

Gegenstand der vorliegenden Erfindung ist ein Verfahren mit den Merkmalen des unabhängigen Anspruchs 1. Gegenstand der vorliegenden Erfindung ist ferner ein Steuergerät zur Ausführung des Verfahrens, ein Fahrzeug mit dem Steuergerät, einem Motorantrieb und mindestens einem Sensorelement sowie ein Computerprogramm.

Unter einem Verfahren zur Steuerung eines Motorantriebs kann im Rahmen der vorliegenden Erfindung ein Steuerverfahren für einen Motorantrieb verstanden werden. Die Schritte des Verfahrens können beispielsweise mittels eines dafür eingerichteten Computerprogramms auf einem Steuergerät ausgeführt werden. Unter einem Motorantrieb kann im Rahmen der vorliegenden Erfindung ein motorischer Antrieb verstanden werden, der ausgebildet ist, eine Motorkraft auf ein Fahrzeug zu übertragen beziehungsweise eine Motorkraft auf ein Fahrzeug aufzubringen. Unter einer Motorkraft kann im Rahmen der vorliegenden Erfindung eine Antriebskraft und/oder eine Bremskraft verstanden werden. Der Motorantrieb ist ausgebildet, mittels eines Antriebsmoments eine Antriebskraft auf das Fahrzeug und/oder mittels eines Bremsmoments eine Bremskraft auf das Fahrzeug zu übertragen. Beispielsweise ist der Motorantrieb ausgebildet, das Antriebsmoment und/oder das Bremsmoment auf mindestens ein Rad des Fahrzeugs zu übertragen. Der Motorantrieb kann zum Beispiel ein Elektromotor oder ein Verbrennungsmotor sein. Der Motorantrieb ist ausgebildet, eine manuelle Antriebsbewegung, insbesondere eine manuelle Abstoßbewegung, mittels eines Antriebsmoments motorisch zu unterstützen und/oder eine manuelle Abstoßbewegung mittels eines Bremsmoments zu hemmen. Das Antriebsmoment und/oder das Bremsmoment können der manuellen Abstoßbewegung zeitlich nachgeordnet oder vorgeordnet sein. Denkbar ist, dass der Motorantrieb beim Bremsen freiwerdende Bremsenergie rekuperiert beziehungsweise zurückgewinnt.

Unter einer manuellen Abstoßbewegung kann im Rahmen der vorliegenden Erfindung eine abstoßende oder abdrückende Bewegung einer Person mit ihrem Körper oder mit einem Körperteil an einer Fläche verstanden werden. Bei dem Körperteil kann es sich beispielsweise um einen Fuß oder eine Hand handeln. Bei der Fläche kann es sich um die Fläche handeln, auf welcher die Fortbewegung des Fahrzeugs erfolgt, beispielsweise ein Untergrund. Hierbei kann das Fahrzeug als Tretroller ausgebildet sein. Dabei wird die manuelle Abstoßbewegung bevorzugt mit dem Fuß, das heißt, mit anderen Worten, als peduelle Abstoßbewegung ausgeführt. Auch ist jedoch denkbar, dass das Abstoßen an einer Fläche wie beispielsweise einem Pedal oder einem Greifreifen erfolgt. Demnach kann es sich bei dem Fahrzeug beispielsweise auch um ein Fahrrad oder einen Rollstuhl handeln.

Unter einem Störzustand kann im Rahmen der vorliegenden Erfindung ein Fahrzustand eines Fahrzeugs mit einem Fahrwiderstand verstanden werden, bei dem ein aktueller Wert der von dem Motorantrieb auf das Fahrzeug aufgebrachten Motorkraft von dem Fahrer des Fahrzeugs unerwünscht ist beziehungsweise zu einer Gefährdung des Fahrers oder einer Umgebung des Fahrers führt. Bei dem Störzustand kann es sich jedoch auch um einen Fahrzustand des Fahrzeugs handeln, der von dem Fahrer bewusst herbeigeführt wird. Unter einem Fahrwiderstand kann im Rahmen der vorliegenden Erfindung eine Kraft verstanden werden, die bei einer Fortbewegung eines Fahrzeugs auf das Fahrzeug wirkt. Beispielsweise kann es sich bei dem Fahrwiderstand um eine Luftwiderstandskraft, eine Rollwiderstandskraft, eine Gleitwiderstandskraft oder eine Hangabtriebskraft handeln.

Unter einem ersten Störzustand kann im Rahmen der vorliegenden Erfindung ein Störzustand verstanden werden, in welchem die Änderung des Fahrwiderstandes aus einer Änderung einer Beschaffenheit einer Kontaktfläche zwischen dem Fahrzeug und einem Untergrund des Fahrzeugs resultiert. Unter einer Beschaffenheit einer Kontaktfläche können im Rahmen der vorliegenden Erfindung Eigenschaften der Kontaktfläche verstanden werden, wobei die Eigenschaften der Kontaktfläche eine Übertragung einer Kraft über die Kontaktfläche beeinflussen. Beispielsweise kann die Beschaffenheit der Kontaktfläche eine über die Kontaktfläche übertragene Rollreibungskraft oder Gleitreibungskraft beeinflussen. Denkbar ist, dass eine glatte oder feuchte Kontaktfläche eine geringere Reibungskraft überträgt als eine strukturierte oder trockene Kontaktfläche.

Unter einem zweiten Störzustand kann im Rahmen der vorliegenden Erfindung ein Störzustand verstanden werden, in welchem die Änderung des Fahrwiderstandes aus einer Inhomogenität in einem Untergrund des Fahrzeugs resultiert. Unter einer Inhomogenität in einem Untergrund eines Fahrzeugs kann im Rahmen der vorliegenden Erfindung ein räumlich begrenzter Bereich im Untergrund des Fahrzeugs verstanden werden, in welchem die Eigenschaften der Kontaktfläche zwischen dem Untergrund und dem Fahrzeug von den überwiegend vorliegenden Eigenschaften der Kontaktfläche zwischen dem Untergrund und dem Fahrzeug abweichen. Beispielsweise kann es sich bei den Inhomogenitäten um Bordsteinkanten, Schlaglöcher oder Spurrillen handeln. Der Untergrund kann zum Beispiel eine Fahrbahn oder ein Radweg sein.

Unter einem dritten Störzustand kann im Rahmen der vorliegenden Erfindung ein Störzustand verstanden werden, in welchem die Änderung des Fahrwiderstandes aus einer manuellen Abbremsbewegung des Fahrers resultiert. Unter einer manuellen Abbremsbewegung kann im Rahmen der vorliegenden Erfindung eine Bewegung des Fahrers des Fahrzeugs verstanden werden, mittels derer der Fahrer eine Kontaktfläche zwischen einem Körperteil des Fahrer und einem Untergrund des Fahrzeugs erzeugt, um eine Bremskraft auf das Fahrzeug aufzubringen. Bevorzugt führt der Fahrer die manuelle Abbremsbewegung mittels eines Fußes aus. Das heißt, mit anderen Worten, der Fahrer erzeugt durch Aufsetzen eines Fußes auf dem Untergrund des Fahrzeugs eine zusätzliche Reibungskraft, um das Fahrzeug abzubremsen. Der Störzustand kann von dem Fahrer also gewollt beziehungsweise gewünscht sein.

Unter einem vierten Störzustand kann im Rahmen der vorliegenden Erfindung ein Störzustand verstanden werden, in welchem die Änderung des Fahrwiderstandes aus einem Abheben eines Bereichs des Fahrzeugs, insbesondere dem Abheben mindestens eines Rades des Fahrzeugs, von dem Untergrund resultiert.

Zur Erkennung eines Störzustandes werden mindestens ein erstes Sensorsignal und mindestens ein zweites Sensorsignal empfangen, wobei das erste Sensorsignal einen Wert der ersten Kenngröße und das zweite Sensorsignal einen Wert der zweiten Kenngröße repräsentiert. Ferner wird zur Erkennung des Störzustandes der Wert oder eine zeitliche Änderung des Wertes der ersten Kenngröße und/oder der Wert oder eine zeitliche Änderung des Wertes der zweiten Kenngröße mit vorgebbaren Werten verglichen.

Unter einer Kenngröße kann im Rahmen der vorliegenden Erfindung eine physikalische Größe verstanden werden. Bevorzugt handelt es sich bei der Kenngröße um ein Element aus einer Liste umfassend: Drehzahl beziehungsweise Drehfrequenz eines Rades, Geschwindigkeit in einer Raumrichtung, Neigung um eine Raumachse, Beschleunigung in einer Raumrichtung, Kraft in einer Raumrichtung, Drehrate um eine Raumachse. Unter einer Raumachse kann im Rahmen der vorliegenden Erfindung eine Rotationsachse, insbesondere eine Wankachse, eine Nickachse oder eine Gierachse verstanden werden.

Anhand mindestens zwei definierter Kenngrößen kann erfindungsgemäß das Vorliegen eines unerwünschten oder gewünschten beziehungsweise gewollten Störzustandes erkannt werden. Denkbar ist auch, dass ein Störzustand anhand der zeitlichen Veränderung der Werte der Kenngrößen erkannt wird. Bei der Kenngröße kann es sich auch um eine Rechengröße, das heißt, mit anderen Worten, eine zu berechnende beziehungsweise eine berechnete Größe handeln.

Unter einem Sensorsignal kann im Rahmen der vorliegenden Erfindung ein analoges oder digitales Signal verstanden werden, das ausgebildet ist, Informationen zu übertragen. Das Signal kann von einem Sensor aussendbar und von einem Steuergerät empfangbar sein. Das Sensorsignal kann aus den Signalen verschiedener Sensoren zusammengesetzt sein. Das Sensorsignal kann mittels Signalverarbeitung bearbeitbar sein.

Weiterhin können zu einer verbesserten Erkennung eines Störzustandes mit einem veränderten Fahrwiderstand die Werte der mittels der Sensorsignale empfangenen Kenngrößen verwendet werden, um eine das Fahrzeug beziehungsweise den Fahrzustand des Fahrzeugs beschreibende Bewegungsgleichung mathematisch zu lösen. Beispielsweise können einen Bewegungszustand des Fahrzeugs beschreibende Bewegungsgleichungen für auf das Fahrzeug in verschiedene Raumrichtungen wirkende Kräfte und/oder für auf das Fahrzeug um verschiedene Raumachsen wirkende Drehmomente gelöst werden. Hierbei können die Bewegungsgleichungen sukzessive für einzelne aufeinanderfolgende diskrete Zeitschritte gelöst werden. Durch das Lösen der Bewegungsgleichung lassen sich die auf das Fahrzeug wirkende Kräfte und/oder Drehmomente ermitteln. Damit kann der Motorantrieb des Fahrzeugs in Abhängigkeit von den ermittelten Kräften und/oder Drehmomenten angesteuert werden. Zu einer verbesserten Erkennung eines Störzustandes mit einem veränderten Fahrwiderstand können weitere Größen miteinbezogen werden. Bei den weiteren Größen kann es sich um eine Stirnfläche des Fahrers des Fahrzeugs, einen Luftwiderstandsbeiwert des Fahrers, eine aktuelle Dichte einer Umgebungsluft des Fahrzeugs, eine Masse des Fahrers, eine Gesamtmasse des Fahrzeugs, einen Rollwiderstandsbeiwert eines Rades des Fahrzeugs, eine Neigung eines Untergrunds des Fahrzeugs, ein Reibmoment des Motorantriebs oder ein Verlustmoment des Motorantriebs handeln. Mittels Berücksichtigung zumindest einer der genannten weiteren Größen insbesondere zu einer numerischen Lösung einer den Fahrzustand beschreibenden Bewegungsgleichung kann ein unerwünschter und/oder ein bewusst herbeigeführter Störzustand besonders präzise erkannt und der Motorantrieb schnell und zielgerichtet angesteuert werden. Hierbei ist es denkbar, dass die weiteren Größen bei einer Lösung der Bewegungsgleichung für zumindest einen Zeitschritt als konstant angenommen werden, um anhand einer Änderung der Kenngrößen den Störzustand zu bestimmen.

Bei Erkennen eines Störzustandes wird der Motorantrieb des Fahrzeugs derart angesteuert, dass eine von dem Motorantrieb auf das Fahrzeug aufgebrachte Motorkraft an den erkannten Störzustand mit dem veränderten Fahrwiderstand angepasst wird. Denkbar ist, dass bei Erkennen eines unerwünschten oder bewusst herbeigeführten Störzustandes der Motorantrieb deaktiviert wird. Denkbar ist auch, dass bei Erkennen eines Störzustandes der Motorantrieb derart angesteuert wird, dass die auf das Fahrzeug übertragene Motorkraft reduziert oder erhöht wird. Beispielsweise kann die Motorkraft derart an den Störzustand angepasst werden, dass die Drehzahl eines Rades, das keine unmittelbare Kontaktfläche zu einem Untergrund des Fahrzeugs aufweist, konstant bliebe. Das heißt, mit anderen Worten, dass die Motorkraft einen Widerstand des Motorantriebs und einer Lagerung beziehungsweise Aufhängung eines Rades kompensiert.

Das erfindungsgemäße Verfahren und das erfindungsgemäße Steuergerät ermöglichen eine Erkennung von einem Störzustand mit einem veränderten Fahrwiderstand des Fahrzeugs, um die Motorkraft an den veränderten Fahrwiderstand anzupassen. Aufgrund der automatisierten Erkennung der Störzustände können Situationen, in welchen die vordefinierte Motorkraft eine Gefährdung des Fahrers oder eines Umfelds des Fahrzeugs bewirkt, sehr schnell erkannt werden. Durch die automatisierte Anpassung der Motorkraft in Abhängigkeit von dem jeweiligen Störzustand kann das Risiko für Unfälle und Stürze reduziert werden. Folglich ermöglichen das erfindungsgemäße Verfahren und das erfindungsgemäße Steuergerät dem Fahrer des Fahrzeugs eine intuitive Steuerung des Fahrzeugs und ein hohes Maß an Sicherheit bei der Fortbewegung mittels des Fahrzeugs.

Es ist vorteilhaft, wenn das erste Sensorsignal und das zweite Sensorsignal gleichzeitig empfangen werden. Das heißt, mit anderen Worten, dass der Wert der ersten Kenngröße und der Wert der zweiten Kenngröße gleichzeitig empfangen werden. Dadurch kann der Störzustand des Fahrzeugs präzise erkannt werden.

Vorteilhaft ist es auch, wenn mindestens eines der beiden Sensorsignale zu mindestens zwei unterschiedlichen Zeitpunkten empfangen und zur Erkennung von einem der Störzustände die zeitliche Änderung der ersten Kenngröße und/oder die zeitliche Änderung der zweiten Kenngröße mit vorgebbaren Werten verglichen wird. Durch das Empfangen eines der Sensorsignale zu zwei unterschiedlichen Zeitpunkten kann eine zeitliche Änderung der von dem Sensorsignal repräsentierten Kenngröße berechnet werden. Die zeitliche Änderung der Kenngröße kann beispielsweise mit für Störzustände charakteristischen zeitlichen Änderungen der Kenngröße verglichen werden. Dadurch kann ein Störzustand mit einem veränderten Fahrwiderstand besonders schnell und präzise erkannt werden.

Weiterhin ist es vorteilhaft, wenn zur Erkennung des ersten Störzustandes der von dem zweiten Sensorsignal repräsentierte Wert der Geschwindigkeit des Fahrzeugs unabhängig von einer Drehzahl eines Rades des Fahrzeugs bestimmt wird. Beispielsweise kann der Wert der Geschwindigkeit des Fahrzeugs mittels eines GPS-Sensors detektiert werden. Der von dem ersten Sensorsignal repräsentierte Wert der Drehzahl des Rades des Fahrzeugs kann unter Verwendung des Umfangs des Rades in eine theoretische Geschwindigkeit des Fahrzeugs umgerechnet werden. Aus einer Abweichung der theoretischen Geschwindigkeit von der tatsächlichen Geschwindigkeit des Fahrzeugs kann zum Beispiel ein Durchdrehen des Rades aufgrund einer zu geringen Haftreibung auf einem Untergrund des Fahrzeugs erkannt werden. Durch diese Ausgestaltung kann die Motorkraft besonders gut an eine Änderung der Beschaffenheit einer Kontaktfläche zwischen dem Fahrzeug und dem Untergrund des Fahrzeugs angepasst werden.

Außerdem ist es vorteilhaft, wenn zur Erkennung des dritten Störzustandes mindestens ein weiteres erstes Sensorsignal empfangen wird, um eine räumliche Verteilung der von dem Fahrer des Fahrzeugs auf das Fahrzeug aufgebrachten Kraft zu ermitteln. Denkbar ist, dass der Fahrer in einem Störzustand den Schwerpunkt seines Körpers verändert. Beispielsweise kann der Fahrer in einem vorderen Randbereich einer Trägerstruktur des Fahrzeugs eine deutlich größere oder kleinere Kraft auf das Fahrzeug aufbringen als in einem hinteren Randbereich der Trägerstruktur. Denkbar ist auch, dass der Fahrer in einem seitlichen Randbereich der Trägerstruktur des Fahrzeugs eine deutlich größere Kraft auf das Fahrzeug aufbringt als in einem zentralen Bereich der Trägerstruktur des Fahrzeugs. Durch die Detektion der räumlichen Verteilung der Kraft kann eine manuelle Abbremsbewegung des Fahrers besonders zuverlässig erkannt werden. Denkbar ist, dass der Fahrer des Fahrzeugs bei einem Bremsvorgang mit einem Fuß des Fahrers eine impulsartige beziehungsweise stoßartige Kraft auf den Untergrund des Fahrzeugs aufbringt und sich gleichzeitig die Verteilung der von dem Fahrer auf das Fahrzeug ausgeübten Kraft ändert. Denkbar ist auch, dass der Fahrer des Fahrzeugs bei einem Bremsvorgang mit einem Fuß des Fahrers eine zeitlich gleichmäßige Kraft auf den Untergrund des Fahrzeugs aufbringt und sich gleichzeitig die Verteilung der von dem Fahrer auf das Fahrzeug ausgeübten Kraft ändert.

Als eine von einem Fahrer des Fahrzeugs auf das Fahrzeug ausgeübte Kraft kann eine auf das Trittbrett ausgeübte Kraft, insbesondere eine Aufstandskraft und/oder eine Schubkraft, erfasst werden. Beispielsweise kann so erfasst werden, ob ein Fahrer eine manuelle Abstoßbewegung durchführt oder ob er eine Bremsbewegung durchführt, wenn beispielsweise die auf das Trittbrett wirkende Kraft reduziert wird. Insbesondere kann die von einem Fahrer des Fahrzeugs auf das Fahrzeug aufgebrachte (Aufstands-)Kraft und/oder eine räumliche Verteilung dieser Kraft mittels mindestens eines im Bereich des Trittbretts angeordneten Kraftsensors erfasst werden. Vorzugsweise sind mindestens zwei Kraftsensoren im Bereich des Trittbretts angeordnet.

In den Rahmen der Erfindung fällt außerdem ein Steuergerät, das eingerichtet ist, das erfindungsgemäße Verfahren durchzuführen.

Weiterhin fällt in den Rahmen der Erfindung ein Computerprogramm, das eingerichtet ist, das erfindungsgemäße Verfahren auszuführen.

Auch ein maschinenlesbares Speichermedium, auf dem das Computerprogramm gespeichert ist, fällt in den Rahmen der Erfindung.

Weiterhin betrifft die Erfindung ein Fahrzeug mit einem erfindungsgemäßen Steuergerät, einem Motorantrieb, mindestens einem ersten Sensorelement zur Detektion des ersten Sensorsignals und mindestens einem zweiten Sensorelement zur Detektion des zweiten Sensorsignals.

Insbesondere kann das Fahrzeug als elektrisch unterstützter Tretroller ausgebildet sein. Ein solches Fahrzeug kann im Bereich eines Trittbretts zumindest einen Kraftsensor aufweisen. Vorzugsweise sind zumindest zwei Kraftsensoren im Bereich des Trittbretts vorgesehen.

### Zeichnungen

Die Erfindung wird nachstehend anhand der beigefügten Zeichnungen beispielhaft näher erläutert. Es zeigen:
- Figur 1: eine schematische Darstellung eines Steuergeräts zur Ausführung eines Verfahrens zur Steuerung eines Motorantriebs mit zwei Sensorelementen und einem Motorantrieb;
- Figur 2: eine schematische Seitenansicht eines als Tretroller ausgebildeten Fahrzeugs mit einer erfindungsgemäßen Steuereinheit und diversen Sensoren;
- Figur 3a-d: schematische Seitenansichten eines als Tretroller ausgebildeten Fahrzeugs mit diversen Sensoren zur Erkennung von Störzuständen;
- Figur 4: ein Ablaufdiagramm eines Verfahrens zur Steuerung eines Motorantriebs.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung der Elemente verzichtet wird.

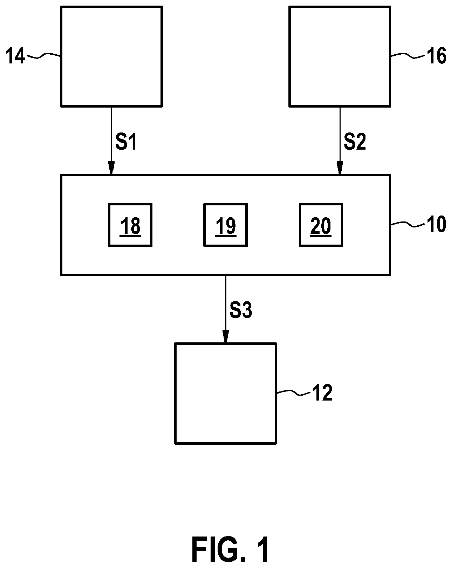

In Figur 1 ist ein Ausführungsbeispiel einer Vorrichtung 10 zur Steuerung eines Motorantriebs 12 beziehungsweise eines Steuergeräts 10 schematisch dargestellt. Die Vorrichtung 10 zur Steuerung des Motorantriebs 12 beziehungsweise das Steuergerät 10 ist mit einem ersten Sensorelement 14, einem zweiten Sensorelement 16 und dem Motorantrieb 12 elektronisch gekoppelt. Hierzu weist das Steuergerät 10 eine nicht dargestellte Schnittstelle auf, mittels derer das erste Sensorelement 14 und das zweite Sensorelement 16 mit dem Steuergerät 10 drahtgebunden elektronisch gekoppelt sind. Alternativ ist die Schnittstelle ausgebildet, das erste Sensorelement 14 und das zweite Sensorelement 16 mit dem Steuergerät 10 drahtlos elektronisch zu koppeln. Das Steuergerät 10 für den Motorantrieb 12 ist ausgebildet, das erste Sensorsignal S1 von dem ersten Sensorelement 14 und das zweite Sensorsignal S2 von dem zweiten Sensorelement 16 zu empfangen sowie ein Steuersignal S3 an den Motorantrieb 12 zu übertragen. Das Steuergerät 10 weist eine Speichereinheit 18, eine Recheneinheit 19 und eine Vergleichseinheit 20 auf.

Das erste Sensorsignal S1 repräsentiert eine erste Kenngröße eines Störzustands des Fahrzeugs. Das zweite Sensorsignal S2 repräsentiert eine zweite Kenngröße des Störzustands des Fahrzeugs. Das erste Sensorelement 14 ist ausgebildet, einen Wert der ersten Kenngröße zu detektieren und an das Steuergerät 10 zu übertragen. Das zweite Sensorelement 16 ist ausgebildet, einen Wert der zweiten Kenngröße zu detektieren und an das Steuergerät 10 zu übertragen.

Das Steuergerät 10 ist ausgebildet, mittels der Schnittstelle einen von dem ersten Sensorsignal S1 repräsentierten Wert der ersten Kenngröße und einen von dem zweiten Sensorsignal S2 repräsentierten Wert der zweiten Kenngröße kontinuierlich zu empfangen. Das Steuergerät 10 ist ausgebildet, den empfangenen Wert der ersten Kenngröße und den Wert der zweiten Kenngröße kontinuierlich zu speichern. Weiterhin ist das Steuergerät 10 ausgebildet, mittels der Vergleichseinheit 20 kontinuierlich den Wert und/oder den zeitlichen Verlauf der ersten Kenngröße und der zweiten Kenngröße mit vorgebbaren oder vorgegebenen Werten zu vergleichen. Das Steuergerät 10 ist ausgebildet, durch diesen Vergleich einen unerwünschten und/oder bewusst herbeigeführten Störzustand zu erkennen.

Das Steuergerät 10 ist ausgebildet, mittels der Speichereinheit 18 zu jedem der vorgebbaren oder vorgegebenen Werte mindestens einen relativen oder absoluten Wert der Motorkraft zu speichern. Das Steuergerät 10 ist ausgebildet, mittels der Recheneinheit 19 aus dem vorgebbaren oder vorgegebenen Wert eine vorteilhafte Änderung der Motorkraft zu ermitteln, um die auf das Fahrzeug aufgebrachte Motorkraft an den Störzustand mit dem geänderten Fahrwiderstand anzupassen. Zusätzlich kann in der Speichereinheit 18 ein Wert und/oder ein zeitlicher Verlauf einer Luftwiderstandskraft, einer Rollwiderstandskraft, einer Hangabtriebskraft für verschiedene Steigungen, einer Verlustleistung des Motorantriebs, einer von dem Fahrer auf das Fahrzeug ausgeübten Kraft, einer bei einer mathematischen Beschreibung des Fahrzustands des Fahrzeugs berechneten Fehlerkraft oder der Motorkraft gespeichert sein, um wie oben beschrieben eine verbesserte Erkennung des Störzustandes auf Grundlage einer den Fahrzustand beschreibenden Bewegungsgleichung zu ermöglichen.

Ferner ist das Steuergerät 10 ausgebildet, das Steuersignal S3 an den Motorantrieb 12 zu übertragen, um den Motorantrieb 12 in einen Betriebszustand zu versetzen, in welchem der Motorantrieb 12 eine an den Störzustand mit dem veränderten Fahrwiderstand angepasste Motorkraft aufbringt.

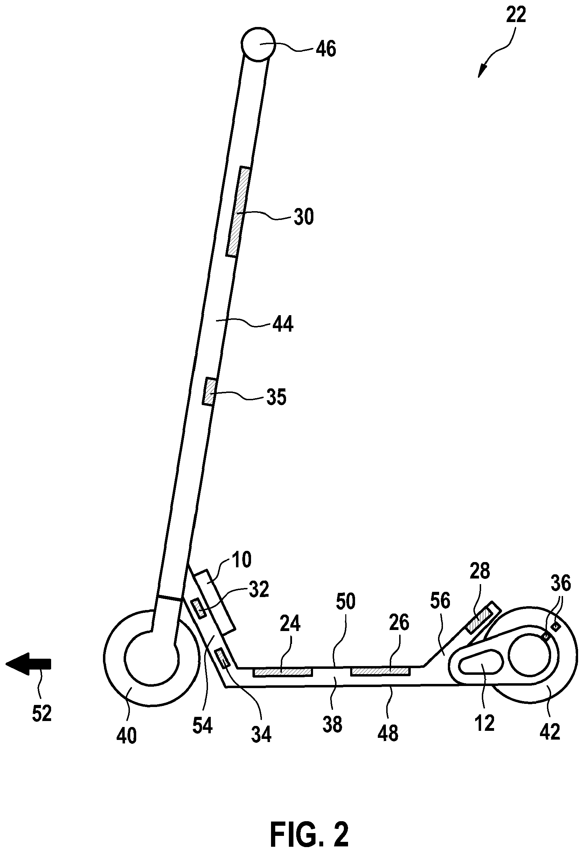

In Figur 2 ist ein Fahrzeug beziehungsweise ein Tretroller dargestellt, wobei das Fahrzeug in seiner Gesamtheit mit der Bezugsziffer 22 versehen ist.

Das Fahrzeug 22 beziehungsweise der Tretroller 22 weist einen Motorantrieb 12, ein Steuergerät 10 für den Motorantrieb 12 und acht Sensorelemente 24, 26, 28, 30, 32, 34, 35, 36 auf. Ferner weist der Tretroller 22 eine Trägerstruktur 38, zwei Räder 40, 42 und einen Lenker 44 mit einer Lenkstange 46 zum Lenken des Tretrollers 22 auf.

Die Trägerstruktur 38 ist als Tretrollerträgerstruktur 38 beziehungsweise Tretrollerrahmen 38 ausgebildet. Die Trägerstruktur 38 weist einen Trittbereich 48 auf. Der Trittbereich 48 weist ein Trittbrett 50 auf. Der Trittbereich 48 dient zur Aufnahme einer zu befördernden Person, insbesondere eines Fahrers. Die Trägerstruktur 38 ist demnach ausgebildet, um eine mit dem Tretroller 22 zu befördernde Person aufzunehmen beziehungsweise zu tragen.

An einem in einer Fahrtrichtung 52 des Tretrollers 22 vorderen Bereich 54 der Trägerstruktur 38 sind das Steuergerät 10, ein Drehratensensor 34 und ein Beschleunigungssensor 32 angeordnet. Der Drehratensensor 34 ist ausgebildet, eine Neigung des Tretrollers 22 relativ zu einer horizontalen Ebene zu detektieren. Der Beschleunigungssensor 32 ist ausgebildet, bei der Fortbewegung mittels des Fahrzeugs 22 auf den Tretroller 22 ausgeübte Beschleunigungen zu detektieren.

Der Beschleunigungssensor 32 und der Drehratensensor 34 können in ihrer Gesamtheit als eine sechsachsige inertiale Messeinheit ausgebildet sein. Hierbei kann die sechsachsige inertiale Messeinheit Beschleunigungen entlang von drei verschiedenen, insbesondere von drei orthogonalen, Raumrichtungen und Drehungen um drei verschiedene, insbesondere drei orthogonale, Raumrichtungen detektieren.

Im Bereich des Trittbretts 50 sind zwei Kraftsensoren 24, 26 angeordnet. An einem in Fahrtrichtung 52 des Tretrollers 22 hinteren Bereich 56 der Trägerstruktur 38 ist ein dritter Kraftsensor 28 angeordnet. Die Kraftsensoren 24, 26, 28 sind ausgebildet, eine von dem Fahrer des Fahrzeugs 22, insbesondere auf die Trägerstruktur 38 des Fahrzeugs 22, ausgeübte Kraft zu detektieren. Bei den Kraftsensoren 24, 26, 28 handelt es sich um Dehnungsmessstreifen 24, 26, 28. Die Kraftsensoren 24, 26, 28 sind ausgebildet, relative und/oder absolute Werte der Druckkräfte auf den Tretroller 22 zu detektieren.

Am vorderen Bereich 54 der Trägerstruktur 38 sind der Lenker 44 und das vordere Rad 40 des Tretrollers 22 angeordnet. Der Lenker 44 ist stangenförmig ausgebildet und zu der Trägerstruktur 38 drehbar gelagert. Der Lenker 44 weist eine Lenkstange 46, einen vierten Kraftsensor 30 und einen Geschwindigkeitssensor 35 auf.

Der vierte Kraftsensor 30 ist ausgebildet, von dem Fahrer des Fahrzeugs 22 auf den Lenker 44 ausgeübte Druckkräfte und/oder Zugkräfte zu detektieren. Die Kraftsensoren 24, 26, 28, 30 sind derart angeordnet, dass anhand der Sensorsignale der Kraftsensoren 24, 26, 28, 30 eine Änderung der räumlichen Verteilung der von dem Fahrer auf das Fahrzeug übertragenen Kräfte detektierbar ist.

Der Geschwindigkeitssensor 35 ist ausgebildet, eine Geschwindigkeit des Fahrzeugs 22 unabhängig von der Drehzahl der Räder 40, 42 zu ermitteln. Bei dem Geschwindigkeitssensor 35 kann es sich beispielsweise um einen GPS-Sensor handeln.

Am hinteren Bereich 56 der Trägerstruktur 38 sind das hintere Rad 42 des Tretrollers 22 und der als Elektromotor 12 ausgebildete Motorantrieb 12 angeordnet. Im Bereich des hinteren Rades 42 ist ein weiterer Geschwindigkeitssensor 36 angeordnet. Der Geschwindigkeitssensor 36 detektiert die Drehzahl des hinteren Rades 42. Aus der Drehzahl des hinteren Rades 42 kann das Steuergerät 10 eine theoretische Geschwindigkeit des Tretrollers 22 bestimmen. Beispielsweise handelt es sich bei dem Geschwindigkeitssensor 36 um einen Hallsensor 36. Das hintere Rad 42 ist mit dem Elektromotor 12 gekoppelt. Der Elektromotor 12 ist ausgebildet, ein Drehmoment auf das hintere Rad 42 zu übertragen.

Die vier Kraftsensoren 24, 26, 28, 30, der Beschleunigungssensor 32, der Drehratensensor 34, die Geschwindigkeitssensoren 35, 36 und der Elektromotor 12 sind elektronisch mit dem Steuergerät 10 gekoppelt. Die Sensoren 24, 26, 28, 30, 32, 34, 35, 36 und der Elektromotor 12 sind mit dem Steuergerät 10 über eine Kabelverbindung elektronisch verbunden. Alternativ kann die elektronische Kopplung verbindungslos über ein Funksignal realisiert sein.

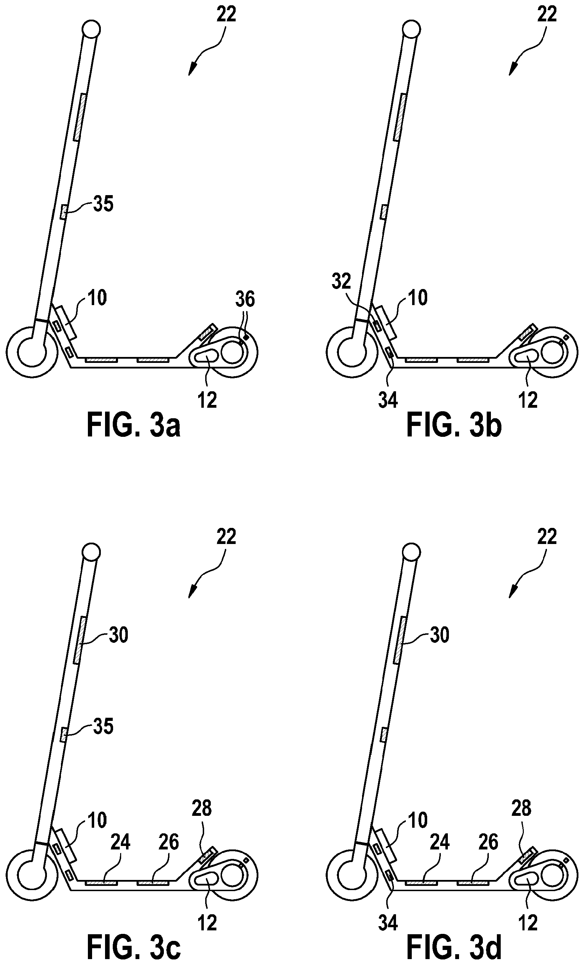

In Figur 3a-d ist jeweils der in Figur 2 gezeigte Tretroller 22 dargestellt, wobei nur das Steuergerät 10, der Motorantrieb 12 und die zum Erkennen der vier Störzustände mit veränderten Fahrwiderständen gemäß Anspruch 1 vorgesehenen Sensorelemente mit Bezugszeichen versehen sind.

Der in Figur 3a dargestellte Tretroller 22 ist ausgebildet, den ersten Störzustand zu erkennen, in welchem die Änderung des Fahrwiderstandes aus einer Änderung einer Beschaffenheit einer Kontaktfläche zwischen dem Tretroller 22 und einem Untergrund des Tretrollers 22 resultiert. Zum Beispiel kann sich die Beschaffenheit der Kontaktfläche zwischen dem Tretroller 22 und dem Untergrund des Tretrollers 22 durch eine Veränderung des Fahrbahnbelags oder bei Niederschlag wie Regen, Schnee oder überfrierender Nässe ändern.

Zur Erkennung des ersten Störzustandes weist der Tretroller 22 einen Drehzahlsensor 36 und einen Geschwindigkeitssensor 35 auf. Das Steuergerät 10 empfängt von dem Drehzahlsensor 36 einen Wert einer Drehzahl des hinteren Rades 42 und von dem Geschwindigkeitssensor 35 einen Wert einer tatsächlichen Geschwindigkeit des Tretrollers 22. Hierbei wird mittels des Geschwindigkeitssensors 35 die tatsächliche Geschwindigkeit des Tretrollers 22 unabhängig von dem Drehzahlsensor 36 bestimmt.

Das Steuergerät 10 vergleicht mittels der Vergleichseinheit 20 den Wert der Drehzahl des hinteren Rades 42 mit in der Speichereinheit 18 des Steuergeräts 10 gespeicherten Werten, um die aus der Drehzahl ableitbare theoretische Geschwindigkeit des Tretrollers 22 zu ermitteln. Anschließend vergleicht das Steuergerät 10 die aus der Drehzahl abgeleitete theoretische Geschwindigkeit des Tretrollers 22 mit dem Wert der mittels des Geschwindigkeitssensors 35 detektierten tatsächlichen Geschwindigkeit des Tretrollers 22.

Ist der Wert der theoretischen Geschwindigkeit des Tretrollers 22 verschieden von dem Wert der tatsächlichen Geschwindigkeit des Tretrollers 22, erkennt das Steuergerät 10 den ersten Störzustand. Ist der Wert der theoretischen Geschwindigkeit des Tretrollers 22 größer als der Wert der tatsächlichen Geschwindigkeit des Tretrollers 22, dreht das hintere Rad 42 durch. Ist der Wert der theoretischen Geschwindigkeit des Tretrollers 22 kleiner als der Wert der tatsächlichen Geschwindigkeit des Tretrollers 22, steckt das hintere Rad 42 fest oder blockiert das hintere Rad 42 zumindest teilweise.

In der Speichereinheit 18 ist jeder tatsächlichen Geschwindigkeit des Tretrollers 22 ein Sollwert der Drehzahl des hinteren Rades 42 des Tretrollers 22 zugeordnet. Hierbei ist der Sollwert der Drehzahl derjenige Wert der Drehzahl, aus dem unter Berücksichtigung eines Durchmessers des hinteren Rades 42 ein Wert der theoretischen Geschwindigkeit des Tretrollers 22 berechenbar ist, wobei dieser berechnete Wert der theoretischen Geschwindigkeit mit dem Wert der tatsächlichen Geschwindigkeit des Tretrollers 22 übereinstimmt.

Anschließend überträgt das Steuergerät 10 ein Steuersignal an den Motorantrieb 12, um den Motorantrieb 12 in einen Betriebszustand zu versetzen, in welchem der Motorantrieb 12 eine Motorkraft derart auf das Fahrzeug überträgt, dass die Drehzahl des hinteren Rades 42 einen der tatsächlichen Geschwindigkeit des Tretrollers 22 zugeordneten Wert annimmt.

Der in Figur 3b dargestellte Tretroller 22 ist ausgebildet, den zweiten Störzustand zu erkennen, in welchem die Änderung des Fahrwiderstandes aus einer Änderung einer Inhomogenität im Untergrund des Fahrzeugs resultiert. Zum Beispiel kann sich bei der Inhomogenität um eine Kante eines Bordsteins, ein Schlagloch oder eine Spurrille in der Fahrbahn handeln.

Zur Erkennung des zweiten Störzustandes weist der Tretroller 22 einen Beschleunigungssensor 32 und einen Drehratensensor 34 auf. Das Steuergerät 10 empfängt von dem Beschleunigungssensor 32 einen Wert einer Beschleunigung des Tretrollers 22 und von dem Drehratensensor 32 einen Wert einer Drehgeschwindigkeit beziehungsweise einer Neigung des Tretrollers 22.

Das Steuergerät 10 vergleicht mittels der Vergleichseinheit 20 den Wert der Beschleunigung des Tretrollers 22 und den Wert der Drehgeschwindigkeit beziehungsweise der Neigung des Tretrollers mit in der Speichereinheit 18 des Steuergeräts 10 gespeicherten Werten. Das Steuergerät 10 ist ausgebildet, anhand des zeitlichen Verlaufs der Beschleunigung und der Neigung des Tretrollers 22 die Inhomogenität zu detektieren. Anhand des zeitlichen Verlaufs der Beschleunigung und der Neigung des Tretrollers 22 kann das Steuergerät 10 ein räumliches Profil der Inhomogenität in dem Untergrund des Tretrollers 22 ermitteln. Hierbei ist das Steuergerät 10 ausgebildet, aus einem abrupten beziehungsweise impulsartigen zeitlichen Anstieg oder Abfall des Wertes der Beschleunigung und einer gleichzeitigen Änderung der Neigung des Tretrollers 22 den zweiten Störzustand zu erkennen.

Anschließend überträgt das Steuergerät 10 ein Steuersignal an den Motorantrieb 12, um den Motorantrieb 12 in einen Betriebszustand zu versetzen, in welchem der Motorantrieb 12 bei einer erkannten Inhomogenität im Untergrund des Tretrollers 22 die Antriebskraft reduziert, um eine Gefährdung beziehungsweise einen Sturz des Fahrers des Tretrollers 22 zu verhindern. Bevorzugt versetzt das Steuergerät 10 den Motorantrieb 12 in einen Betriebszustand, in welchem der Motorantrieb 12 keine Motorkraft auf den Tretroller 22 überträgt. Alternativ versetzt das Steuergerät 10 den Motorantrieb 12 in einen Betriebszustand, in welchem der Motorantrieb 12 eine Motorkraft derart auf den Tretroller 22 aufbringt, dass die durch die Inhomogenitäten erzeugten impulsartigen Änderungen in der Beschleunigung beziehungsweise der Geschwindigkeit des Tretrollers 22 verkleinert oder vollständig ausgeglichen werden.

Der in Figur 3c dargestellte Tretroller 22 ist ausgebildet, den dritten Störzustand zu erkennen, in welchem die Änderung des Fahrwiderstandes aus einer manuellen Abbremsbewegung des Fahrers resultiert. Zum Beispiel kann der Fahrer des Tretrollers 22 das Fahrzeug abbremsen, indem er mittels eines Fußes eine Kraft auf den Untergrund des Tretrollers 22, insbesondere auf die Fahrbahn überträgt. Durch das Ausüben der Kraft auf den Untergrund des Tretrollers 22, übt der Fahrer eine kleinere Kraft auf die Trägerstruktur 38 oder auf das Trittbrett 50 des Tretrollers 22 aus.

Zur Erkennung des dritten Störzustandes weist der Tretroller 22 vier Kraftsensoren 24, 26, 28, 30 und einen Geschwindigkeitssensor 35 auf. Das Steuergerät 10 empfängt von den Kraftsensoren 24, 26, 28, 30 jeweils einen Wert einer von dem Fahrer auf den Tretroller 22 übertragenen Kraft und von dem Geschwindigkeitssensor 35 einen Wert einer Geschwindigkeit des Tretrollers 22.

Das Steuergerät 10 vergleicht mittels der Vergleichseinheit 20 die Werte der von dem Fahrer auf den Tretroller 22 übertragenen Kräfte und den Wert der Geschwindigkeit des Tretrollers 22 mit in der Speichereinheit 18 des Steuergeräts 10 gespeicherten Werten. Aus einer Reduktion der von dem Fahrer auf den Tretroller 22 ausgeübten Druckkraft und einer gleichzeitigen Reduktion der Geschwindigkeit des Tretrollers 22 erkennt das Steuergerät 10 den dritten Störzustand.

Für eine verbesserte Erkennung des dritten Störzustandes kann zusätzlich insbesondere anhand der Sensorsignale der Kraftsensoren 24, 26, 28 ermittelt werden, ob der Fahrer nur mit einem Bein auf dem Tretroller 22 steht.

Anschließend überträgt das Steuergerät 10 ein Steuersignal an den Motorantrieb 12, um den Motorantrieb 12 in einen Betriebszustand zu versetzen, in welchem der Motorantrieb 12 bei einer erkannten manuellen Abbremsbewegung des Fahrers keine Motorkraft auf den Tretroller überträgt 22, um dem Bremsvorgang des Fahrers nicht entgegenzuwirken. Denkbar ist auch, dass der Motorantrieb 12 eine Bremskraft, insbesondere eine elektromagnetische Bremskraft, auf den Tretroller 22 überträgt, um dem Bremsvorgang des Fahrers aktiv zu unterstützen.

Der in Figur 3d dargestellte Tretroller 22 ist ausgebildet, den vierten Störzustand zu erkennen, in welchem die Änderung des Fahrwiderstandes aus einem Abheben eines Bereichs des Fahrzeugs von dem Untergrund resultiert. Zum Beispiel kann das Fahrzeug an einer Steigung mit dem vorderen Rad 40 oder an einem Gefälle mit dem hinteren Rad 42 abheben, was zu einem Sturz des Fahrers führen kann.

Zur Erkennung des vierten Störzustandes weist der Tretroller 22 vier Kraftsensoren 24, 26, 28, 30 und einen Drehratensensor 32 auf. Das Steuergerät 10 empfängt von den Kraftsensoren 24, 26, 28, 30 jeweils einen Wert einer von dem Fahrer auf den Tretroller 22 übertragenen Kraft und von dem Drehratensensor 32 einen Wert einer Drehgeschwindigkeit beziehungsweise einer Neigung des Tretrollers 22.

Das Steuergerät 10 vergleicht mittels der Vergleichseinheit 20 den Wert der von dem Fahrer auf den Tretroller 22 übertragenen Kräfte und die den Wert der Geschwindigkeit des Tretrollers 22 mit in der Speichereinheit 18 des Steuergeräts 10 gespeicherten Werten. Aus einer Veränderung der Verteilung der von dem Fahrer auf das Fahrzeug ausgeübten Kräfte und einer gleichzeitigen Vergrößerung der Neigung in oder entgegen der Fahrtrichtung des Fahrzeugs erkennt das Steuergerät 10 den vierten Störzustand. Beispielsweise verlagert sich der Massenschwerpunkt des Fahrers des Tretrollers 22 bei einem Abheben des vorderen Rades 40 nach hinten, sodass die Druckkräfte auf die Kraftsensoren 26, 28 am hinteren Bereich 56 des Fahrzeugs 22 zunehmen und auf den Kraftsensor 24 am vorderen Bereich 54 des Tretrollers 22 abnehmen. Gleichzeitig erhöht sich die Zugkraft an dem an dem Lenker 44 angeordneten Kraftsensor 30.

Anschließend überträgt das Steuergerät 10 ein Steuersignal an den Motorantrieb 12, um den Motorantrieb 12 in einen Betriebszustand zu versetzen, in welchem der Motorantrieb 12 bei einem erkannten Abheben eines Rades 40, 42 des Fahrzeugs die Antriebskraft reduziert beziehungsweise den Motorantrieb 12 deaktiviert, um eine Gefährdung beziehungsweise einen Sturz des Fahrers des Tretrollers 22 zu verhindern.

Zu einer verbesserten Erkennung von einem der unerwünschten oder gewünschten beziehungsweise gewollten Störzustände mit einem veränderten Fahrwiderstand können zusätzlich die Werte der weiteren genannten Größen berücksichtigt beziehungsweise zu einer Lösung der Bewegungsgleichungen hinzugezogen werden.

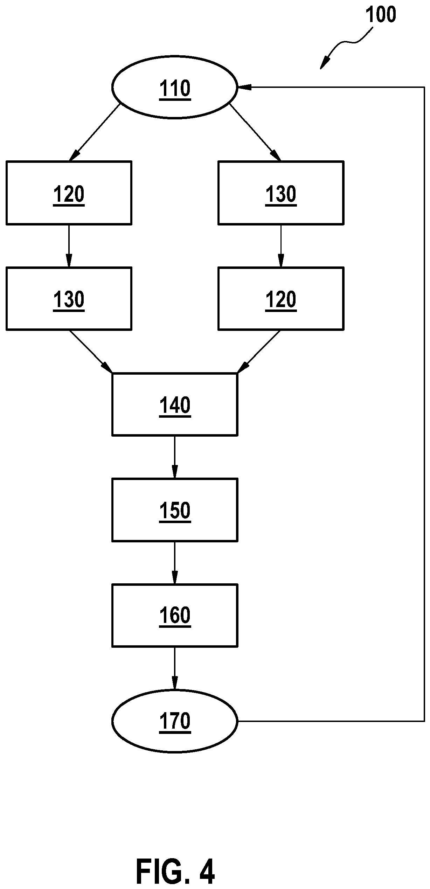

Figur 4 zeigt ein Ablaufdiagramm eines Verfahrens zur Steuerung eines Motorantriebs 12 mittels des Steuergeräts 10. Das Verfahren ist in seiner Gesamtheit mit dem Bezugszeichen 100 versehen.

In Schritt 110 beginnt das Verfahren. In Schritt 120 empfängt das Steuergerät 10 das erste Sensorsignal S1 von dem ersten Sensorelement 14. Das Steuergerät 10 speichert das erste Sensorsignal S1 mittels der Speichereinheit 18. In Schritt 130 empfängt das Steuergerät 10 das zweite Sensorsignal S2 von dem zweiten Sensorelement 16. Das Steuergerät 10 speichert das zweite Sensorsignal S2 mittels der Speichereinheit 18. Schritt 120 und Schritt 130 können auch in umgekehrter Reihenfolge oder gleichzeitig ausgeführt werden.

In Schritt 140 vergleicht das Steuergerät 10 mittels der Vergleichseinheit 20 den von dem ersten Sensorsignal S1 repräsentierten Wert des ersten Kenngröße und den von dem zweiten Sensorsignal S2 repräsentierten Wert des zweiten Kenngröße mit vorgebbaren oder vorgegebenen Werten, um einen Störzustand mit einem veränderten Fahrwiderstand zu erkennen.

In Schritt 150 ermittelt das Steuergerät 10 mittels der Vergleichseinheit 20 und/oder der Recheneinheit 19 einen Zielwert für die von dem Motorantrieb 12 auf das Fahrzeug aufgebracht Motorkraft. Denkbar ist, dass zu jedem vorgegebenen oder vorgebaren Wert ein Zielwert für die Motorkraft gespeichert ist.

In Schritt 160 überträgt das Steuergerät 10 das Steuersignal S3 an den Motorantrieb 12, um den Motorantrieb 12 in einen Betriebszustand zu versetzen, in welchem der Motorantrieb 12 eine an den Störzustand mit dem veränderten Fahrwiderstand angepasste Motorkraft auf das Fahrzeug 22 überträgt. In Schritt 170 endet das Verfahren und beginnt erneut in Schritt 110.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (100) zur Erkennung eines Störzustandes mit einem veränderten Fahrwiderstand eines mittels einer manuellen Abstoßbewegung antreibbaren Fahrzeugs (22) zur Fortbewegung mindestens einer Person, um einen Motorantrieb (12) des Fahrzeugs (22) derart anzusteuern, dass eine von dem Motorantrieb (12) auf das Fahrzeug (22) aufgebrachte Motorkraft an den Störzustand mit dem veränderten Fahrwiderstand angepasst wird, mit folgenden Schritten:
- Empfangen (120; 130) mindestens eines ersten Sensorsignals (S1) und mindestens eines zweiten Sensorsignals (S2), wobei das erste Sensorsignal (S1) einen Wert einer ersten Kenngröße und das zweite Sensorsignal (S2) einen Wert einer zweiten Kenngröße repräsentiert; und
- Vergleichen (140) des Wertes oder einer zeitlichen Änderung des Wertes der ersten Kenngröße und des Wertes oder einer zeitliche Änderung des Wertes der zweiten Kenngröße mit vorgebbaren Werten, um den Störzustand zu erkennen;
wobei
- die erste Kenngröße eine Drehzahl eines Rades des Fahrzeugs (22) und die zweite Kenngröße eine Geschwindigkeit des Fahrzeugs (22) repräsentiert, um einen ersten Störzustand zu erkennen, in welchem die Änderung des Fahrwiderstandes aus einer Änderung einer Beschaffenheit einer Kontaktfläche zwischen dem Fahrzeug (22) und einem Untergrund des Fahrzeugs (22) resultiert; oder
- die erste Kenngröße eine Neigung des Fahrzeugs (22) um eine Raumachse und die zweite Kenngröße eine Beschleunigung des Fahrzeugs (22) repräsentiert, um einen zweiten Störzustand zu erkennen, in welchem die Änderung des Fahrwiderstandes aus einer Inhomogenität in einem Untergrund des Fahrzeugs (22) resultiert; oder
- die erste Kenngröße die von einem Fahrer des Fahrzeugs (22) auf das Fahrzeug (22) aufgebrachte Kraft und/oder eine räumliche Verteilung dieser Kraft und die zweite Kenngröße eine Geschwindigkeit des Fahrzeugs (22) repräsentiert, um einen dritten Störzustand zu erkennen, in welchem die Änderung des Fahrwiderstandes aus einer manuellen Abbremsbewegung des Fahrers resultiert; oder
- die erste Kenngröße die von einem Fahrer des Fahrzeugs (22) auf das Fahrzeug (22) aufgebrachte Kraft und/oder eine räumliche Verteilung dieser Kraft und die zweite Kenngröße eine Drehrate des Fahrzeugs (22) um eine Raumachse und/oder einen Wert einer Neigung des Fahrzeugs (22) um eine Raumachse repräsentiert, um einen vierten Störzustand zu erkennen, in welchem die Änderung des Fahrwiderstandes aus einem Abheben eines Bereichs des Fahrzeugs (22) von dem Untergrund resultiert.

2. Verfahren (100) nach Anspruch 1, **dadurch gekennzeichnet, dass** das erste Sensorsignal (S1) und das zweite Sensorsignal (S2) gleichzeitig empfangen werden.

3. Verfahren (100) nach Anspruch 1 oder 2, **dadurch gekennzeichnet, dass** mindestens eines der beiden Sensorsignale (S1, S2) zu mindestens zwei unterschiedlichen Zeitpunkten empfangen wird, um die zeitliche Änderung des Wertes der entsprechenden Kenngröße zu erkennen.

4. Verfahren (100) nach einem der vorhergehenden Ansprüche, **dadurch gekennzeichnet, dass** zur Erkennung des ersten Störzustandes der von dem zweiten Sensorsignal repräsentierte Wert der Geschwindigkeit des Fahrzeugs (22) unabhängig von einer Drehzahl eines Rades des Fahrzeugs (22) bestimmt wird.

5. Verfahren nach einem der vorhergehenden Ansprüche, **dadurch gekennzeichnet, dass** die von einem Fahrer des Fahrzeugs (22) auf das Fahrzeug (22) aufgebrachte Kraft und/oder eine räumliche Verteilung dieser Kraft mittels mindestens eines im Bereich des Trittbrets (50) angeordneten Kraftsensors (24, 26) erfasst wird.

6. Verfahren nach einem der vorhergehenden Ansprüche, **dadurch gekennzeichnet, dass** als eine von einem Fahrer des Fahrzeugs (22) auf das Fahrzeug (22) ausgeübte Kraft eine auf das Trittbrett (50) ausgeübte Kraft erfasst wird.

7. Steuergerät (10), das eingerichtet ist, um das Verfahren (100) gemäß einem der Ansprüche 1 bis 6auszuführen.

8. Computerprogramm, das dazu eingerichtet ist, das Verfahren (100) gemäß einem der Ansprüche 1 bis 6 auszuführen.

9. Maschinenlesbares Speichermedium, auf dem das Computerprogramm nach Anspruch 8 gespeichert ist.

10. Fahrzeug (22) mit einem Steuergerät (10) nach Anspruch 7, einem Motorantrieb (12), mindestens einem ersten Sensorelement (12) zur Detektion des ersten Sensorsignals (S1) und mindestens einem zweiten Sensorelement (14) zur Detektion des zweiten Sensorsignals (S2).

11. Fahrzeug (22) nach Anspruch10, **dadurch gekennzeichnet, dass** das Fahrzeug (22) als elektrisch unterstützter Tretroller (22), als elektrisch unterstütztes Fahrrad oder als elektrisch unterstützter Rollstuhl ausgebildet ist.

12. Fahrzeug nach Anspruch 10 oder 11, **dadurch gekennzeichnet, dass** es im Bereich eines Trittbretts (50) zumindest einen Kraftsensor (24, 26) aufweist.
